# EUROPEAN PATENT APPLICATION

(11) **EP 4 371 411 A1**
(43) Date of publication of application: **22.05.2024**
(21) Application number: 22841742.4
(22) Date of filing: 30.03.2022
(51) Int. Cl.: A01N 59/16, A01N 25/00, A01P 1/00, A01P 3/00, C09D 5/16, C09D 7/61, C09D 7/63, C09D 201/00

(54) **HARMFUL ORGANISM CONTROL COMPOSITION**

(30) Priority: 16.07.2021 JP 2021118193
(71) Applicant: Nippon Soda Co., Ltd., Tokyo 100-7010 (JP)
(72) Inventor: KOBAYASHI, Daiya, Ichihara-shi, Chiba 290-0045 (JP); HAMAKAWA, Akira, Ichihara-shi, Chiba 290-0045 (JP); FUJITA, Nami, Ichihara-shi, Chiba 290-0045 (JP); IWASE, Mika, Ichihara-shi, Chiba 290-0045 (JP)
(74) Representative: Sonnenhauser, Thomas Martin
(86) International application number: PCT/JP2022/015954
(87) International publication number: WO 2023/286394

(57) **Abstract**

The object of the present invention is to provide a silver-containing harmful organism controlling composition in which coloration is unlikely to occur. The harmful organism controlling composition of the present invention contains: component (A), component (B), and component (C) below: (A) a nitrogen-containing heterocyclic compound of formula (1) and/or salts thereof: 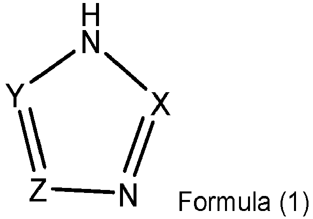 Wherein in formula (1), X is a nitrogen atom or a substituted or unsubstituted carbon atom, Y is a nitrogen atom or a substituted or unsubstituted carbon atom, and Z is a substituted or unsubstituted carbon atom, and when Y is a carbon atom, Y and Z can form a substituted or unsubstituted benzene ring or a substituted or unsubstituted 6-membered heterocycle together; (B) one or more metal components selected from the group consisting of aluminum, calcium, magnesium, zinc, and copper; and (C) a silver component.

## Description

### Technical Field

The present invention relates to silver-containing harmful organism controlling composition. This application claims priority to Japanese Patent Application No. 2021-118193, filed on July 16, 2021, the content of which is incorporated herein by reference in its entirety.

### Background Art

Silver is widely used for fungicides, disinfectants, antibacterial agents, preservatives, antiviral agents, and algaecides due to its high safety. However, silver is generally susceptible to chemical changes, such as being reduced by ultraviolet rays and precipitated, or reacting with chloride ions to precipitate insoluble silver chloride. As a result, problems such as discoloration and coloration occur, which visually impairs the product value.

For example, Patent Document 1 describes that a compound formed by combining a triazole or a derivative thereof with a silver ion can suppress silver coloration. Patent Document 2 describes an antibacterial antifungal agent containing a compound formed by combining a nucleic acid base and a silver ion as an active ingredient.

### Prior Art Documents

### Patent Documents

Patent Document 1: Japanese unexamined Patent Application Publication No. 08-245597
Patent Document 2: Japanese unexamined Patent Application Publication No. 2000-16904

### Summary of the Invention

### Object to be Solved by the Invention

An object of the present invention is to provide a silver-containing harmful organism controlling composition in which coloration is reduced, and changes in color tone are less likely to occur.

### Means to Solve the Object

As a result of repeated studies to achieve the aforementioned object, the inventors have found that a silver-containing harmful organism controlling composition in which coloration is less likely to occur can be provided by comprising a specific nitrogen-containing heterocyclic compound and/or salts thereof, one or more metal components selected from the group consisting of aluminum, calcium, magnesium, zinc, and copper, and a silver component, thereby accomplishing the present invention.

That is, the present invention includes the following aspects.
[1] A harmful organism controlling composition comprising:
   (A) a nitrogen-containing heterocyclic compound of formula (1) and/or salts thereof: 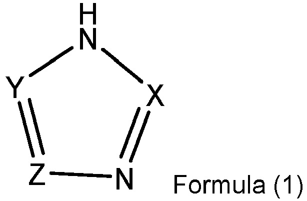 Wherein in formula (1), X is a nitrogen atom or a substituted or unsubstituted carbon atom, Y is a nitrogen atom or a substituted or unsubstituted carbon atom, and Z is a substituted or unsubstituted carbon atom, and when Y is a carbon atom, Y and Z can form a substituted or unsubstituted benzene ring or a substituted or unsubstituted 6-membered heterocycle together;
   (B) one or more metal components selected from the group consisting of aluminum, calcium, magnesium, zinc, and copper; and
   (C) a silver component.
[2] The harmful organism controlling composition according to [1], wherein a molar ratio of the nitrogen-containing heterocyclic compound of formula (1) with respect to the one or more metal components selected from the group consisting of aluminum, calcium, magnesium, zinc, and copper and the silver component is 10:1 to 1:4.
[3] The harmful organism controlling composition according to [1] or [2], wherein a content ratio of the silver component is equal molar or more with respect to that of the one or more metal components selected from the group consisting of aluminum, calcium, magnesium, zinc, and copper.
[4] The harmful organism controlling composition according to any one of [1] to [3], wherein the nitrogen-containing heterocyclic compound of formula (1) is any one compound of 1,2,4-triazole, methyltetrazole, benzotriazole, xanthine, hypoxanthine, and methyl benzotriazole.
[5] The harmful organism controlling composition according to any one of [1] to [4], wherein the one or more metal components selected from the group consisting of aluminum, calcium, magnesium, zinc, and copper is a zinc component.
[6] The harmful organism controlling composition according to any one of [1] to [5], wherein the composition comprising the nitrogen-containing heterocyclic compound of formula (1), the one or more metals selected from the group consisting of aluminum, calcium, magnesium, zinc, and copper, and silver is a complex.
[7] A resin molded body comprising the harmful organism controlling composition according to any one of [1] to [6].
[8] A paint comprising the harmful organism controlling composition according to any one of [1] to [6].
[9] A harmful organism controlling composition comprising the harmful organism controlling composition according to any one of claims [1] to [6] and at least one of other industrial biocides.

### Effect of the Invention

In the harmful organism controlling composition of the present invention, coloration that may occur due to the silver contained therein is reduced, and changes in color tone are less likely to occur. For example, even in the presence of chlorine ions, coloration due to the precipitation of silver chloride is less likely to occur. Nevertheless, it remains biologically active.

Compositions containing silver have had a problem in that it is difficult to achieve both activity and coloration suppression, but the composition of the present invention can solve this problem.

Therefore, the harmful organism controlling composition of the present invention is particularly useful in fields where silver is used, where coloration has been a problem until now. Further, since the amount of silver used can be suppressed, the price may be suppressed.

### Brief Description of Drawings

[Figure 1] Figure 1 is a powder X-ray diffraction data of the powder obtained in each of Examples 1, 3, 4, and 7, and Comparative Examples 1 and 2.
[Figure 2] Figure 2 is a powder X-ray diffraction data of the powder obtained in each of Examples 5 and 6, and Comparative Examples 1 and 2.
[Figure 3] Figure 3 is a solid state NMR (13C-NMR) data of each of Examples 3 and 5, Comparative Examples 1 and 2, and mixtures.
[Figure 4] Figure 4 is a solid state NMR (15N-NMR) data of each of Example 3, Comparative Examples 1 and 2, and 1,2,4-triazole.
[Figure 5] Figure 5 is a photograph showing the results of abuse tests on the powder obtained in each of Example 4 and Comparative Example 1. While the solid obtained in Example 4 maintained its white color, the powder obtained in Comparative Example 1 turned black.

### Mode of Carrying Out the Invention

### (Harmful organism controlling composition)

The harmful organism controlling composition of the present invention comprises:
(A) the nitrogen-containing heterocyclic compound of formula (1) and/or salts thereof;
(B) one or more metal components selected from the group consisting of aluminum, calcium, magnesium, zinc, and copper; and
(C) a silver component.

The composition of the present invention may be in any form as long as it comprises: component (A), component (B), and component (C) above. At least a part of component (A), component (B), and component (C) above form a reaction product, but unreacted raw materials may also be present.

Preferably, all are reaction products.

The structures of the reaction products have not been determined, but they are considered to form complexes.

In the present invention, the "metal components" and "silver component" include metal atoms and silver atoms present in the reaction products, and metal salts and silver salts derived from raw materials, if present.

### Component (A) (nitrogen-containing heterocyclic compound and/or salts thereof)

The nitrogen-containing heterocyclic compound is expressed as formula (1).

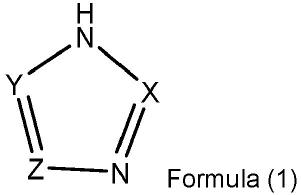

In formula (1), X is a nitrogen atom or a substituted or unsubstituted carbon atom, Y is a nitrogen atom or a substituted or unsubstituted carbon atom, and Z is a substituted or unsubstituted carbon atom, and when Y is a carbon atom, Y and Z can form a substituted or unsubstituted benzene ring or a substituted or unsubstituted 6-membered heterocycle together.

The "unsubstituted carbon atom" means -CH=.

Examples of the substituent on carbon in X include C1 to 6 alkyl groups such as a methyl group and an ethyl group.

Examples of the substituent on carbon in each of Y and Z include C1 to 6 alkyl groups such as a methyl group and an ethyl group; a hydroxyl group; an amino group; C1 to 6 alkylamino groups such as a methylamino group and an ethylamino group; a carboxamide group.

Examples of the 6-membered heterocycle include an aromatic heterocycle or an unsaturated heterocycle having a nitrogen atom, an oxygen atom, or a sulfur atom as a heteroatom, and the 6-membered heterocycle is preferably a nitrogen-containing ring, such as pyridine, pyrazine, pyrimidine, pyridazine, or triazine.

Examples of the substituent on the 6-membered heterocycle include an oxo group (=O) other than the examples of the substituent on carbon in each of X, Y, and Z above.

As the nitrogen-containing heterocyclic compound of formula (1) used in the present invention, any one of 1,2,4-triazole (1,2,4-TAZ), methyltetrazole, benzotriazole, xanthine, hypoxanthine, and methyl benzotriazole is particularly preferable.

Examples of the salt of the nitrogen-containing heterocyclic compound of formula (1) include salts of inorganic acids such as hydrochloric acid and sulfuric acid; salts of organic acids such as acetic acid and lactic acid; salts of alkali metals such as lithium, sodium, and potassium; salts of alkaline earth metals such as calcium and magnesium; salts of transition metals such as iron and copper; salts of organic bases such as triethylamine, tributylamine, pyridine, and hydrazine; and ammonium salts.

### Component (B) (metal components)

The harmful organism controlling composition of the present invention comprises one or more metal components selected from the group consisting of aluminum, calcium, magnesium, zinc, and copper. Among these, zinc is particularly preferably contained. These metal components may be used alone or used by combination of two or more thereof.

The metal components are derived from metal salts added as raw materials, and in the case where nitrogen-containing heterocyclic compounds are aluminum, calcium, magnesium, zinc, or copper salt, the metal components further include metal components derived therefrom.

### Component (C) (silver component)

This component is the active substance of the harmful organism controlling composition of the present invention. In order to sufficiently exert the biological activity, the silver component is preferably contained in an equimolar amount or more as compared to the total amount of one or two or more metal components selected from the group consisting of aluminum, calcium, magnesium, zinc, and copper.

### (Composition ratio)

In the harmful organism controlling composition of the present invention, the molar ratio of the nitrogen-containing heterocyclic compound to the sum of the one or more metal components selected from the group consisting of aluminum, calcium, magnesium, zinc, and copper and the silver component is preferably 10:1 to 1:4, more preferably 10:1 to 1:3, further preferably 10:1 to 1:2.

### (Preparation of harmful organism controlling composition)

The harmful organism controlling composition of the present invention is obtained by mixing the nitrogen-containing heterocyclic compound and/or salts thereof, a silver salt dissolved in a suitable solvent, one or more metal salts selected from the group consisting of aluminum, calcium, magnesium, zinc, and copper (hereinafter, referred to as "other metal salts") in a solvent.

As the silver salt and other metal salts that serve as raw materials, any known ones may be used without limitation depending on the type of the solvent, but examples thereof include inorganic salts such as a nitrate, a hydrochloride, a phosphate, and sulfate; and organic acid salts such as an acetate, an oxalate, a citrate, and a benzoate.

Among these, a nitrate and the like may be preferably used.

The solvent used may be of any type, as long as it can dissolve the nitrogen-containing heterocyclic compound and/or salts thereof, the silver salt, and the other metal salts and does not easily dissolve the product.

Examples thereof include water; organic acids such as formic acid, acetic acid, lactic acid, oxalic acid, citric acid, and benzoic acid; alcohols such as methanol, ethanol, isopropyl alcohol, isobutyl alcohol, and n-butanol; amines such as ethanolamine, dimethylamine, and pyridine; amides such as dimethylformamide, dimethylacetamide, and N-methylpyrrolidone; ketones such as acetone, methyl ethyl ketone, methyl isobutyl ketone, cyclohexanone, and acetyl acetone; ethers such as diethyl ether, dimethyl ether, and tetrahydrofuran; ether group-containing alcohols such as ethyl cellosolve, butyl cellosolve, and propylene glycol monomethyl ether; esters such as ethyl acetate, butyl acetate, ethyl lactate, and butyl lactate; hydrocarbons such as hexane, benzene, xylene, and toluene; halogenated hydrocarbons such as dichloromethane, carbon tetrachloride, chloroform, and chilichloroethylene; acetonitriles; mineral oils, synthetic hydrocarbon oils, synthetic ester oils, natural oils, natural oil derivatives, ether oils, silicone oils, and fluorine oils. These solvents may be used alone or used by combination of two or more thereof.

In view of the production cost and the subsequent processing, the solvent particularly preferably water.

The conditions during mixing are as follows.

The mixing ratio of the nitrogen-containing heterocyclic compound and/or salts thereof to silver salt and other metal salts in preparation is preferably in the range in molar ratio of the nitrogen-containing heterocyclic compound and/or salts thereof:the silver salt and other metal salts = 1:20 to 20:1, more preferably in the range in molar ratio of 1:15 to 5:1.

The mixing ratio of the silver salt to the other metal salts in preparation is preferably in the range in molar ratio of the silver salt:the other metal salts = 20:1 to 1:20, more preferably 10:1 to 2:1.

The reaction may be performed at any temperature for any duration.

When the reaction is performed in a solvent, the molar concentration of the silver salt and the other metal salts in the solvent is preferably 0.005 to 5 mol/L, more preferably 0.01 to 2 mol/L. The molar concentration of the nitrogen-containing heterocyclic compound and/or salts thereof is preferably 0.001 to 5 mol/L, more preferably 0.005 to 2 mol/L.

In the harmful organism controlling composition of the present invention, the nitrogen-containing heterocyclic compound and/or salts thereof may be simply mixed with the other metal salts and the silver salt, but it may be reacted at high temperature/under compression by putting it into a pressure-resistant container such as an autoclave. The heating temperature of the reaction solution is not particularly limited, as long as a composition that allows the effects of the present invention to be exerted can be obtained, but is preferably in the range of room temperature to 200°C. When heating, 100 to 150°C is preferable.

The reaction time of this production method is not particularly limited, as long as a composition that allows the effects of the present invention to be exerted can be obtained, one hour to one week is preferable for more excellent yield of the composition.

For preparation of the harmful organism controlling composition of the present invention, a basic compound may be used. The basic compound has the function of anionizing the nitrogen-containing heterocyclic compound and making it easier to react with the metal salt. The type of the basic compound is not particularly limited, and a known basic compound may be used.

Examples of the basic compound include alkali metal hydroxides such as lithium hydroxide, sodium hydroxide, potassium hydroxide, alkaline earth metal hydroxides such as barium hydroxide and calcium hydroxide, carbonates such as sodium carbonate, potassium carbonate, and sodium hydrogen carbonate, and amine compounds such as triethylamine and diisopropylethylamine. Among these, sodium hydroxide is preferable due to the ease of dissolution in the solvent.

In the case of using a salt of the nitrogen-containing heterocyclic compound as a raw material, this does not apply.

The procedure of this production method is not particularly limited, as long as a composition that allows the effects of the present invention to be exerted can be obtained, but examples thereof preferably include a method of mixing the nitrogen-containing heterocyclic compound and/or salts thereof, the silver salt and the other metal salts in the presence of a solvent and a basic compound. More specifically, examples include a method of reacting by adding the silver salt and the other metal salts, and the basic compound, as required, dissolved in a suitable solvent to the nitrogen-containing heterocyclic compound and/or salts thereof dissolved in a suitable solvent. In this production method, the mixing method of the reactant is not particularly limited, and a known method may be employed. Further, the order of adding the components is not specifically limited, and the components may be added to the reaction container at the same time, or they may be added sequentially in order.

After the completion of the reaction, the product and the solvent are easily separated by a separation method such as filtration or centrifugation of the reaction system.

The product prepared by the aforementioned step can be separated and purified by separation means such as filtration, concentration, distillation, extraction, crystallization, recrystallization, and column chromatography, or a combination of these.

The structure, composition, performance of the harmful organism controlling composition as the present invention may be confirmed by using a common technique. For example, X-ray diffraction measurement (confirmation of crystal structure), 13C-CPMAS-NMR and 15N-CPMAS-NMR (structural analysis of product), thermal analysis (measurement of heat resistance), ICP and elemental analysis (confirmation of composition), MIC test (confirmation of performance), or the like nay be used.

The harmful organism controlling composition of the present invention behaves differently from Comparative Examples 1 and 2 when measured by X-ray diffraction (XRD), X-ray photoelectron spectroscopy (XPS), thermal analysis method, nuclear magnetic resonance spectroscopy, or the like. It probably forms a complex rather than the physical mixture of Comparative Examples 1 and 2.

### (Optional components that may be used together with the harmful organism controlling composition of the present invention)

Depending on the application, the harmful organism controlling composition of the present invention may be used together with other components by adding other components or adding itself to the other components. Examples of the other components include resins, solvents, surfactants, coupling agents, fillers, insecticides, fungicides, herbicides, plant growth regulators, and industrial biocides.

### (Resins)

The harmful organism controlling composition of the present invention may be used together with various resins, depending on the application and performances required. Examples of the resins include thermoplastic resins and thermosetting or photocurable resins. These resins may be used alone, or used by combination of two or more thereof.

Examples of the thermoplastic resins include styrene resins, acrylic resins, vinyl acetate resins, acrylonitrile copolymers, polyphenylene oxide resins, polysulfone resins, polyether sulfone, polyarylate, polyetherimide, polyamideimide, polyimide, polymethylmethacrylate, acrylonitrile-styrene copolymer resins, acrylonitrile-styrene-N-substituted maleimide ternary copolymers, acrylonitrile-butadiene-styrene copolymer resins, styrene-maleic anhydride copolymer resins, styrene-maleic anhydride-N-substituted maleimide copolymer resins, polycarbonate resins, polybutylene terephthalate resins, polyethylene (such as linear low-density polyethylene, low-density polyethylene, and high-density polyethylene), polyethylene terephthalate, polybutylene terephthalate, polyvinyl chloride, polypropylene, styrene-butadiene-styrene block copolymers and hydrogenated substances thereof, styrene-butadiene rubber, acrylonitrile-butadiene rubber, polybutadiene, polyisoprene, styrene-isoprene-styrene block copolymers and hydrogenated substances thereof, polyolefin elastomers, polyester elastomers, polystyrene, acrylic resins, methyl methacrylate-styrene copolymers, acrylonitrile-styrene-methyl methacrylate copolymers, polyacetal resins, modified polyphenylene ether resins, ethylene-vinyl acetate copolymers, polyphenylene sulfide resins, polyphenyl sulfone, polyether ketone, polyetheretherketone, polyether, cycloolefin polymers, liquid crystal polyester resins, liquid crystal polymers, polyamide, fluorocarbon polymers, polyvinylpyrrolidone, natural rubber, butyl rubber, polyisobutylene, and polysulfide.

The thermosetting resins are cured by a polymerization reaction or a crosslinking reaction proceeding by heating. Examples of the thermosetting resin include phenolic resins, epoxy resins, melamine resins, urea resins, unsaturated polyester resins, alkyd resins, polyurethane, thermosetting polyimide, and diallyl phthalate resins. A thermoplastic resin mixed with a vulcanizing agent, a curing agent, or a crosslinking agent may be used.

The photocurable resins are cured by a polymerization reaction or a crosslinking reaction proceeding by irradiation with light such as ultraviolet rays. For example, it is formed by mixing a photoinitiator such as photoradical generator, a photocation generator, a photoacid generator, and a photobase generator with a desired monomer or oligomer. The monomer or oligomer that may be used for the photocurable resins is not particularly limited, and examples thereof include 1,2-epoxy-4-(2-oxiranyl) cyclohexane adducts of (meth)acrylate monomers, (meth)acrylate oligomers, bisphenol A diglycidyl ether, hydrogenated bisphenol A diglycidyl ether, bisphenol F diglycidyl ether, cyclohexanedimethanol diglycidyl ether 3,4-epoxycyclohexylmethyl-3',4'-epoxycyclohexane carboxylate, and 2,2-bis(hydroxymethyl)-1-butanol; oxetane compounds such as xylylene bisoxetane and 3-ethyl-3-hydroxymethyloxetane; and vinyl ether monomers such as cyclohexane dimethanol divinyl ether, 2-ethylhexyl vinyl ether, cyclohexane dimethanol monovinyl ether, and 4-hydroxybutyl vinyl ether.

Examples of the other resins include silicone, acrylic silicone, modified silicone, Japanese lacquer, glues, petroleum resins, and hydrogenated petroleum resins; starch such as rice, wheat, corn, potato, sweet potato, and tapioca; and other natural products or biodegradable plastics made from these as raw materials.

In the case of using the harmful organism pest control agent composition of the present invention as the resin composition, the amount of resin contained in the resin composition can be appropriately set depending on the application. For example, the amount of resin may be in the ranges of 5 to 99 parts by mass, 30 to 95 parts by mass, 50 to 90 parts by mass, in 100 parts by mass of the resin composition.

### (Solvents)

The harmful organism controlling composition of the present invention may be used together with solvents as a composition. The solvents in which the harmful organism controlling composition of the present invention can be dispersed or dissolved may be selected depending on the application and are not specifically limited. Examples thereof include the same solvents as those mentioned as examples in Preparation Example.

### (Surfactants)

The harmful organism controlling composition of the present invention may be used together with surfactants as a composition.

Examples of the surfactants include nonionic surfactants, anionic surfactants, cationic surfactants, and amphoteric surfactants.

Examples of the nonionic surfactants include polyoxyalkylene alkylphenyl ether, polyoxyalkylene arylphenyl ether, polyoxyalkylene alkyl ether, sorbitan fatty acid ester, polyoxyalkylene fatty acid ester, polyoxyalkylene sorbitan fatty acid ester, and polyoxyalkylene vegetable oil.

Examples of the anionic surfactants include alkylbenzene sulfonate, lignin sulfonic acid or salts thereof, naphthalene sulfonate formaldehyde condensate, polyoxyethylene alkyl ether sulfate, polyoxyethylene alkylphenyl ether sulfate, and dialkyl sulfosuccinate.

Examples of the cationic surfactants include aliphatic amine salt and quaternary ammonium salt.

Examples of the amphoteric surfactants include alkyl betaine-type surfactants, amidopropyl betaine-type surfactants, imidazolinium betaine-type surfactants, sulfobetaine-type surfactants, and phosphobetaine-type surfactants.

The total amount of surfactants which can be contained in the composition of the present invention is not specifically limited but is, for example, in the ranges of 2 to 100 parts by mass, 15 to 30 parts by mass, with respect to 100 parts by mass of the nitrogen-containing heterocyclic compound and/or salts thereof.

### (Coupling agents)

Examples of the coupling agents include silane coupling agents, titanate coupling agents, aluminate coupling agents, and zirconate coupling agents.

Examples of the silane coupling agents include 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, 3-methacryloxypropylmethyldimethoxysilane, 3-methacryloxypropyltrimethoxysilane, 3-methacryloxypropylmethyldiethoxysilane, and 3-methacryloxypropyltriethoxysilane.

Examples of the titanate coupling agents include titanium alkoxides such as tetraisopropyl titanate, tetra-n-butyl titanate, tetrakis(2-ethylhexyloxy)titanium, and titanium-i-propoxyoctylene glycolate; and titanium complexes such as titanium acetylacetonate, titanium tetraacetylacetonate, di-i-propoxy-bis(acetylacetonate)titanium, di-n-propoxy-bis(acetylacetonate)titanium, di-n-butoxy-bis(acetylacetonate)titanium, diethoxy-bis(acetylacetonate)titanium, and propanedioxytitanium bis(ethyl acetoacetate).

Examples of the aluminate coupling agents include aluminum alcoholates such as aluminum isopropylate, mono-sec-butoxyaluminum diisopropylate, and aluminum ethylate; aluminum complexes such as ethyl acetoacetate aluminum diisopropylate, aluminum bisethyl acetoacetate·monoacetylacetonate, aluminum tris(ethylacetoacetate), aluminum tris(acetylacetonate), diethoxymono(acetylacetonato)aluminum, di-i-propoxymono(acetylacetonato)aluminum, di-n-propoxymono(acetylacetonato)aluminum, di-n-butoxymono(acetylacetonato)aluminum, ethoxybis(acetylacetonato)aluminum, i-propoxybis(acetylacetonato)aluminum, n-propoxybis(acetylacetonato)aluminum, and n-butoxybis(acetylacetonato)aluminum; and cyclic aluminum oligomers.

Examples of the zirconate coupling agents include zirconium tetrakis(acetylacetonate), di-n-butoxybis(acetylacetonato)zirconium, zirconium tetrakis(ethyl acetoacetate), diethoxybisacetylacetonatozirconium, di-i-propoxybis(acetylacetonato)zirconium, di-n-propoxybis(acetylacetonato)zirconium, tri-n-butoxymonoethylacetoacetatozirconium, and tri-n-butoxymonoacetylacetonatozirconium.

### (Fillers)

Examples of the fillers include carbon black, graphene, carbon nanotube, glass fiber, iron oxide, baryte, talc, calcium carbonate, kaolin, clay, silica, titanium dioxide, alumina, zirconia, silicone resin fine particles, fluorocarbon polymers fine particles, acrylic resin fine particles, urethane resin fine particles, silicone-modified urethane resin fine particles, polyethylene fine particles, and polycarbonate resin fine particles.

### (Insecticides, fungicides, herbicides, plant growth regulators, industrial biocides, or the like)

The harmful organism controlling composition of the present invention may be used together with fungicides, insecticides, herbicides, plant growth regulators, industrial biocides, or the like as a composition. These components may be used without particular limitation. The active ingredient used may be liquid or solid, an organic compound or inorganic compound, and may be a single compound or mixture.

Specific examples are shown below.

Examples of the insecticides include pyrethroid compounds such as cyfluthrin, cypermethrin, deltamethrin, fenpropathrin, fenvalerate, esfenvalerate, tralomethrin, acrinathrin, bifenthrin, resmethrin, tetramethrin, Tefluthrin, Etofenprox, cyphenothrin, permethrin, prallethrin, pyrethrin, and silafluofen; carbamate compounds such as Propoxur, isoprocarb, xylylcarb, metolcarb, XMC, carbaryl, pirimicarb, carbofuran, methomyl, Fenoxycarb, alanycarb, and methoxadiazone; organic phosphorus compounds such as acephate, phenthoate, vamidothion, trichlorfon, monocrotophos, tetrachlorvinphos, dimethylvinphos, phosalone, chlorpyrifos, Chlorpyrifosmethyl, pyridaphenthion, quinalphos, methidathion, methamidophos, dimethoate, fermothion, Azinphos-ethyl, Azinphos-methyl, Salithion, and Fenitrothion; urea compounds such as diflubenzuron, Chlorfluazuron, Lufenuron, Hexaflumuron, Flufenoxuron, Flucycloxuron, Cyromazine, Diafenthiuron, Hexythiazox, Novaluron, Teflubenzuron, Triflumuron, 4-chloro-2-(2-chloro-2-methylpropyl)-5-(6-iodine-3-pyridylmethoxy) pyridazine-3 (2H)-one, 1-(2,6-difluorobenzoyl)-3-[2-fluoro-4-(trifluoromethyl)phenyl]urea, 1-(2,6-difluorobenzoyl)-3-[2-fluoro-4-(1,1,2,3,3,3-hexafluoropropoxy)phenyl]urea, 2-tert-butylimino-3-isopropyl-5-phenyl-3,4,5,6-tetrahydro-2H-1,3,5-thiadiazon-4-one, and 1-(2,6-difluorobenzoyl)-3-[2-fluoro-4-(1,1,2,2-tetrafluoroethoxy)phenyl]urea; neonicotinoid compounds such as Imidacloprid, Acetamiprid, Nitenpyram, Diacloden, Thiamethoxam, Clothianidin, Thiacloprid, and Dinotefuran; Fipronil, cartap, buprofezin, thiocyclam, Bensultap, Fenoxycarb, Fenazaquin, Fenpyroximate, Pyridaben, Pyriproxyfen, Hydramethylnon, Thiodicarb, Fenobucarb, Chlorfenapyr, Fenpyroximate, Pymetrozine, Pyrimidifen, Tebufenozide, Tebufenpyrad, Methoxyfenozide, Triazamate, Indoxacarb, Sulfluramid, Milbemectin, Avermectin, Chlorantraniliprole, Pyriprole, Broflanilide, Flupyradifurone, Dicloromezotiaz, boric acid, disodium octaborate tetrahydrate, borax, borax pentahydrate, paradichlorobenzene, and capric acid.

Examples of fungicides include benzimidazole compounds such as benomyl, carbendazim, thiabendazole, and thiophanate-methyl; phenyl carbamate compounds such as Diethofencarb; dicarboxyimide compounds such as procymidone, iprodione, and vinclozolin; azole compounds such as Triflumizole, Hexaconazole, Diniconazol, Epoxiconazole, tebuconazole, Difenoconazole, Cyproconazole, Propiconazole, Flusilazole, Triadimefon, Metconazole, Myclobutanil, imazalil, and Triforine; acyl alanine compounds such as Metalaxyl; carboxyamide compounds such as Furametpyr, Mepronil, Flutolanil, and trifluzamide; organic phosphorus compounds such as Tolclofos-methyl, Fosetyl-aluminium, and Pyrazophos; anilinopyrimidine compounds such as Pyrimethanil, Mepanipyrim, and Cyprodinil; cyanopyrrole compounds such as Fludioxonil and Fenpiclonil; antibiotics such as blasticidin S, Kasugamycin, Polyoxin, and validamycin; methoxyacrylate compounds such as Azoxystrobin, Pyraclostrobin, Trifloxystrobin, Kresoxim-methyl, and SSF-126; iminoctadine acetate, iminoctadine albesylate, Penflufen, Chlorothalonil, Manzeb, Captan, Folpet, Oxine-copper, copper oxychloride, Tricyclazole, Pyroquilon, Probenazole, Fthalide, Cymoxanil, Dimethomorph, CGA245704, Famoxadone, oxolinic acid, Fluazinam, Ferimzone, chlobenthiazone, isovaledione, thiophthalimidoxybisphenoxyarsine, and 3-iodo-2-propylbutylcarbamate.

Examples of the herbicides include triazine compounds such as Atrazine and Metribuzin; urea compounds such as Fluometuron and isoproturon; hydroxybenzonitrile compounds such as Bromoxynil and Ioxynil; 2,6-dinitroaniline compounds such as pendimethalin and Trifluralin; allyloxyalkanoic acid compounds such as 2,4-D, Dicamba, Fluroxypyr, and Mecoprop; sulfonylurea compounds such as Bensulfuron-methyl, Metsulfuron-methyl, Nicosulfuron, Primisulfuron-methyl, and Cyclosulfamuron; imidazolinone compounds such as Imazapyr, Imazaquin, and Imazethapyr; bispyribac Na salt, bisthiobac Na salt, acifluorfen Na salt, Sulfentrazone, Paraquat, Flumetsulam, Triflusulfuron-methyl, Fenoxaprop-p-ethyl, Cyhalofop-butyl, Diflufenican, Norflurazon, Isoxaflutole, Glufosinate ammonium salt, glyphosate, Bentazone, Benthiocarb, Mefenacet, Propanil, and Fluthiamid.

Examples of the plant growth regulators include maleic hydrazide, Chlormequat, ethephon, gibberellin, Mepiquat chloride, Thidiazuron, Inabenfide, paclobutrazol, and Uniconazole. Examples of the insect repellents include 1S,3R,4R,6R-Carane-3,4-diol and dipropyl 2,5-pyridinedicarboxylate.

Examples of the industrial biocides include the agrohorticultural chemicals, bactericidal antifungal agents, preservatives, algaecides, or wood preservatives mentioned above, and examples thereof include quaternary ammonium salts compounds such as didecyldimethylammonium chloride (DDAC), didecyldimethylammonium adipate (DDAA), benzalkonium chloride, N,N-didecyl-N-methyl-polyoxyethyl-ammonium propionate (DMPAP), N,N-didecyl-N,N-dimethylammonium bicarbonate, and N,N-didecyl-N,N-dimethylammonium carbonate, Biguanide compounds such as polyhexamethylene Biguanide (PHMB), polyhexamethylene guanidine (PHMG), and chlorhexidine gluconate, pyridinium compounds such as cetylpyridinium chloride and dodecylpyridinium chloride, organic iodine-containing compounds such as 3-iodo-2-propinyl-butyl carbamate (IPBC), pyridine compounds such as 2,3,5,6-tetrachloro-4-(methyl sulfonyl) pyridine (TCMSP), pyrithione compounds such as zinc pyrithione and sodium pyrithione, benzothiazole compounds such as 2-(4-thio cyanomethylthio)benzothiazole, imidazole compounds such as methyl-2-benzimidazole carbamate and 2-(4-thiazolyl)-benzimidazole, thiocarbamate compounds such as tetramethylthiuram disulfide, nitrile compounds such as 2,4,5,6-Tetrachloroisophthalonitrile, haloalkylthio compounds such as N-(fluorodichloromethylthio)-phthalimide and N-(fluorodichloromethylthio)-N,N'-dimethyl-N-phenyl-sulfamide, triazole compounds such as α-t-butyl-α(p-chlorophenylethyl)-1H-1,2,4-triazole-1-ethanol (Common name: tebuconazole), isothiazoline compounds such as 1,2-benzisothiazolin-3-one, N-methyl-1,2-benzisothiazole-3 (2H)-one, 2-methyl-4,5-trimethylene-4-isothiazoline-3-one, 5-chloro-2-methyl-4-isothiazoline-3-one, 2-methyl-4-isothiazoline-3-one, 2-n-octyl-4-isothiazoline-3-one, 4,5-dichloro-2-n-octyl-4-isothiazoline-3-one, 2-ethyl-4-isothiazoline-3-one, 4,5-dichloro-2-cyclohexyl-4-isothiazoline-3-one, 5-chloro-2-ethyl-4-isothiazoline-3-one, 5-chloro-2-methyl-4-isothiazoline-3-one, 5-chloro-2-t-octyl-4-isothiazoline-3-one, 2-n-butyl-1,2 benzisothiazolin-3-one, and 4,5-dichloro-2-n-octyl-4-isothiazoline-3-one, bromine compounds such as 2-bromo-2-nitro-1,3-propanediol, 2,2-dibromo-2-nitroethanol, and 2,2-dibromo-3-nitrilopropionamide, p-chlorometacresol, 4-chloro-3,5-xylenol, triazine-1,3,5(2H,4H,6H)-triethanol, streptomycin, diuron (DCMU), dymron, Metobenzuron, Cumyluron, Nicosulfuron, Linuron, Cybutryne, Terbutryn, Simazine, Atrazine, Propazine, Cyanazine, Dimethametryn, Prometryn, Butralin, Benfluralin, Prodiamine, Benzofenap, Pyraflufen-ethyl, Bifenox, Bromobutide, Bromoxynil, Propanil, Diflufenican, Mefenacet, Clomeprop, Diclosulam, Dithiopyr, Isoxaben, Lenacil, Pyributicarb, Pyriminobac-methyl, Oxadiazon, Oryzalin, Oxadiargyl, Fluthiacet-methyl, Pyribenzoxim, Pentoxazone, silver zeolite, silica gel silver, zirconium phosphate silver salt, histidine silver complex, parahydroxybenzoic acid ester, sodium benzoate, sodium dehydroacetate, potassium sorbate, methylparaben, methylene bisthiocyanate, cupric oxide, cupric hydroxide, creosote oil, lithium salt, sodium salt, potassium salt, magnesium salt, and calcium salt.

### (Other components)

The harmful organism controlling composition of the present invention may be used by adding further various components or in addition to various components as a composition depending on the purpose, as long as the effects of the present invention are not impaired. Examples of such components include flame retardants, heat stabilizers, antioxidants, lubricants, antistatic agents, UV inhibitors, coloring agents, mold release agents, heat shielding agents, dispersants, pH adjusters, defoaming agents, rust inhibitors, viscosity modifiers, sequestering agents, and friction modifiers. Two or more of these components may be used in combination.

### (Applications)

The harmful organism controlling composition of the present invention exhibits antimicrobial activities such as preservative activity, antibacterial activity, antifungal activity, antivirus activity, and antialgae activity. Therefore, it may be suitably used for any material such as both solid and liquid products, as long as it that requires antimicrobial properties.

For example, it may be preferably used for imparting harmful organism control activities to paints, resin emulsions, aqueous waxes, joint materials, sealing materials, cement admixtures, pressure-sensitive adhesives, glues, varnishes, pigments, inks, fibers, pulps, rubbers, latexes, adhesives, films, formulations, ceramic materials, metal processing oils, dyes, dampening water for printing, surface sizing agents, coating liquids for paper, papermaking chemicals, heat and pressure sensitive paints, textile processing chemicals, detergents, mold coating agents, various industrial water, freshness preservation liquids for cut flowers, bathtub water, or the like.

### (Use as resin molded bodies, paints, glues, varnishes)

The harmful organism controlling composition of the present invention can be used as it is use but can be mixed with resins, solvents, water, or the like, as required, to prepare various compositions such as resin molded bodies, paints, glues, varnishes, resin emulsions, aqueous waxes, rubber latexes, joint materials, sealing materials, cement admixtures, adhesives, pressure-sensitive adhesives, pigment dispersions, dye solutions, dampening water for printing, surface sizing agents, coating liquids for paper, papermaking chemicals, heat sensitive pressure sensitive dyes, textile processing chemicals, detergents, mold coating agents, metal processing oils, various industrial water, freshness preservation liquids for cut flowers, and bathtub water sterilizers.

When used as resin molded bodies, paints, or the like, additives that are conventionally known constituent components may be contained. For example, fillers, pigments, dyes, curing agents, polymerization inhibitors, mold release agents, thickeners, viscosity-reducing agents, defoaming agents, foaming agents, separation inhibitors, leveling agents, plasticizers, emulsifiers, drying agents, solvents, glass fibers, carbon fibers, and surfactants may be contained.

The mixing method can be conventionally known, but for example, in the case of using resins, it can be produced by melt-kneading. Specifically, examples thereof include a method by weighing predetermined amounts of a thermoplastic resin, a nitrogen-containing heterocyclic compound and/or salts thereof, a silver component, and other metal components, and other additive components to be mixed as required, mixing using various mixers such as tumblers, Henschel mixers, and melt-kneading using Banbury mixers, rolls, brabender, single-screw kneading extruders, twinscrew kneading extruders, kneaders, or the like.

As a method for molding a resin molded body, any conventionally known method for molding a molded product from a thermoplastic resin material can be applied without limitation. Specifically, examples thereof include common injection molding, ultra-high-speed injection molding, injection compression molding, two-color molding, hollow molding methods such as gas assist, molding methods using an insulated mold, molding methods using rapid heating mold, foam molding (also including supercritical fluid), insert molding, in-mold coating (IMC) molding, extrusion molding, sheet molding, thermoforming, rotation molding, lamination molding, and press molding.

In the case of using the harmful organism controlling composition of the present invention for paints, it may be a resin composition obtained by mixing the harmful organism controlling composition with a resin, and the resin composition may contain the aforementioned additives. Furthermore, it may contain solvents or water for imparting fluidity. Alternatively, the harmful organism controlling composition of the present invention may be supplemented with commercially available paints.

The article to be coated with the paints is not specifically limited. Examples thereof include articles used for items used in water-related equipment of housing such as outer wall surfaces, inner wall surfaces, parts to be coated, kitchenware, and bathroom accessories.

The coating method is also not specifically limited. Examples thereof include application by dipping, brushing, roller, spraying, coater, or the like.

In the case of using the harmful organism controlling composition of the present invention as resin emulsions, aqueous waxes, rubber latexes, joint materials, sealing materials, cement admixtures, adhesives, pressure-sensitive adhesives, pigment dispersions, dye solutions, dampening water for printing, surface sizing agents, coating liquids for paper, papermaking chemicals, heat sensitive pressure sensitive dyes, textile processing chemicals, detergents, mold coating agents, metal processing oils, various industrial water, freshness preservation liquids for cut flowers, or bathtub water sterilizers, it may be a composition obtained by mixing the harmful organism controlling composition with water or a solvent, and the composition may further contain the aforementioned other components.

In the case of using the harmful organism controlling composition of the present invention as a resin composition, the resin composition and its molded product exhibits antimicrobial activities i.e., preservative activity, antibacterial activity, antifungal activity, and antivirus activity. Therefore, it may be suitably used for applications that require antimicrobial properties, such as water-related products i.e., spraying containers and kitchenware ; house hold products i.e., food packaging materials, cover cloths, and garbage covers; sanitation products i.e., rubber shoes; building materials i.e., bathroom interiors, floor mats, wall sheets, wall papers, Shoji papers, flooring materials, sealing agents, adhesives, and paints; building exterior materials i.e., resin sidings, ceramic sidings, and tiles; absorbable textile products i.e., diapers, napkins, incontinence pads medical sanitary products i.e., gowns, operating gowns; toilet products i.e., disposable toilets and toilet covers; pet products i.e., pet sheets, pet diapers, and pet towels; home appliance materials i.e., air cleaner filters, air conditioners, humidifiers, and dehumidifiers; packaging containers and food or beverage packages; dental and medical materials i.e., pharmaceutical packaging materials, eye drop containers, contact lenses, spectacle lenses, intraocular lenses, and oral treatment devices; textile products i.e., bedding, socks, and underwear; housing members i.e., PC exterior materials and exterior materials of tablet terminals; cosmetics materials i.e., foundation containers; toddler toys; stationeries; toys; surface film materials for mobile phones/smartphones; water filtration materials; and human-touch materials i.e., keyboards, mice, handrails, and push buttons.

Hereinafter, examples are shown, but the technical range of the present invention is not limited to these examples.

### Examples

### Example 1: AgZn-TAZ

In a 50 ml vial, 7.5 mmol of 1,2,4-triazole (which will be hereinafter referred to as TAZ) dissolved in distilled water, and a total of 7.5 mmol of a silver nitrate aqueous solution and a zinc nitrate aqueous solution were added (silver:zinc = 9:1 (molar ratio)), followed by stirring at room temperature for one hour. Thereafter, 1M sodium hydroxide was added thereto, followed by further stirring at room temperature for one hour. Thereafter, centrifugation was performed, followed by washing with each of water and acetone several times and drying under vacuum to obtain a white powder.

### Example 2: AgZn-TAZ

The ratio of silver:zinc was set to 8:2 (molar ratio), and synthesis was performed in the same manner as Example 1 to obtain a white powder.

### Example 3: AgZn-TAZ

The ratio of silver:zinc was set to 7:3 (molar ratio), and synthesis was performed in the same manner as Example 1 to obtain a white powder.

### Example 4: AgZn-TAZ

The ratio of silver:zinc was set to 6:4 (molar ratio), and synthesis was performed in the same manner as Example 1 to obtain a white powder.

### Example 5: AgZn-TAZ

The ratio of silver:zinc was set to 5:5 (molar ratio), and synthesis was performed in the same manner as Example 1 to obtain a white powder.

### Example 6: AgZn-TAZ

The ratio of silver:zinc was set to 1:9 (molar ratio), and synthesis was performed in the same manner as Example 1 to obtain a white powder.

### Example 7: AgZn-TAZ

The ratio of silver:zinc was set to 97.5:2.5 (molar ratio), and synthesis was performed in the same manner as Example 1 to obtain a white powder.

### Example 8: AgZn-methyltetrazole

1,2,4-Triazole was changed to methyltetrazole, and synthesis was performed in the same manner as Example 3 to obtain a white powder.

### Example 9: AgZn-benzotriazole

1,2,4-Triazole was changed to benzotriazole, and synthesis was performed in the same manner as Example 3 to obtain a white powder.

### Example 10: AgZn-xanthine

1M sodium hydroxide was added to 7.5 mmol of xanthine dissolved in distilled water in a 50 ml vial, and a silver nitrate solution and a zinc nitrate aqueous solution were added thereto in a total of 7.5 mmol (silver:zinc = 7:3 (molar ratio)), followed by stirring at room temperature for one hour. Thereafter, centrifugation was performed, followed by washing with each of water and acetone several times and drying under vacuum to obtain a yellow powder.

### Example 11: AgZn-hypoxanthine

Xanthine was changed to hypoxanthine, and synthesis was performed in the same manner as Example 10 to obtain a white powder.

### Example 12: AgZn-methyl benzotriazole

1,2,4-Triazole was changed to methyl benzotriazole, and synthesis was performed in the same manner as Example 3 to obtain a white powder.

### Example 13: AgCa-TAZ

Using a calcium nitrate aqueous solution instead of the zinc nitrate aqueous solution, the ratio of silver:calcium was set to 7:3 (molar ratio), and synthesis was performed in the same manner as Example 3 to obtain a white powder.

### Example 14: AgMg-TAZ

Using a magnesium nitrate aqueous solution instead of the zinc nitrate aqueous solution, the ratio of silver:magnesium was set to 7:3 (molar ratio), and synthesis was performed in the same manner as Example 3 to obtain a white powder.

### Example 15: AgAl-TAZ

Using an aluminum nitrate aqueous solution instead of the zinc nitrate aqueous solution, the ratio of silver:aluminum was set to 7:3 (molar ratio), and synthesis was performed in the same manner as Example 3 to obtain a white powder.

### Example 16: AgCu-TAZ

Using a copper nitrate aqueous solution instead of the zinc nitrate aqueous solution, the ratio of silver:copper was set to 9:1 (molar ratio), and synthesis was performed in the same manner as Example 1 to obtain a light blue powder.

### Comparative Example 1: Ag-TAZ

The ratio of silver:zinc was set to 10:0 (molar ratio), and synthesis was performed in the same manner as Example 1 to obtain a white powder.

### Comparative Example 2: Zn-TAZ

The ratio of silver:zinc was set to 0:10 (molar ratio), and synthesis was performed in the same manner as Example 1 to obtain a white powder.

### Comparative Example 3: AgZn-uracil

1,2,4-Triazole was changed to uracil, and synthesis was performed in the same manner as Example 3 to obtain a gray powder.

### Comparative Example 4: AgZn-cytosine

Xanthine was changed to cytosine, and synthesis was performed in the same manner as Example 10 to obtain a white powder.

### Comparative Example 5: AgZn-uric acid

Xanthine was changed to uric acid, and synthesis was performed in the same manner as Example 10 to obtain a black powder.

### Comparative Example 6: AgZn-hexamethylenetetraamine

1,2,4-Triazole was changed to hexamethylenetetraamine, and synthesis was performed in the same manner as Example 3 to obtain a black powder.

### Comparative Example 7: AgZn-melamine

1,2,4-Triazole was changed to melamine, the solvent was changed from water to DMSO, and synthesis was performed in the same manner as Example 3 to obtain a brown powder.

### Comparative Example 8: Cu-TAZ

Using a copper nitrate aqueous solution instead of the zinc nitrate aqueous solution, the ratio of silver:copper was set to 0:10 (molar ratio), and synthesis was performed in the same manner as Example 1 to obtain a blue powder.

### (Tests)

### <XRD analysis>

XRD measurement was performed using a Bruker D2 phaser (CuK radiation), with a solar slit of 4 mm, a divergent slit of 0.4 mm, an air scatter screen of 1 mm, and a step of 0.02°.

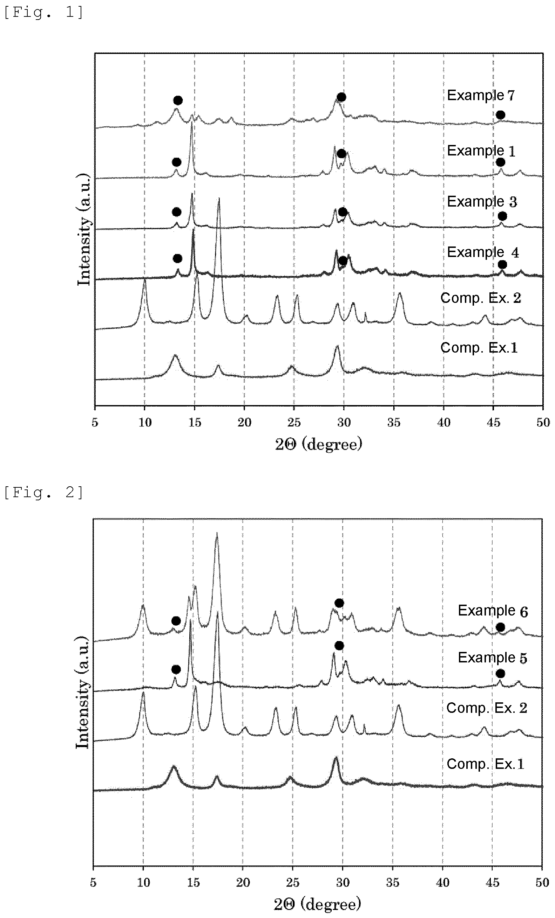

Figure 1 and Figure 2 show the X-ray diffraction data of the composition powder obtained in each of Examples 1, 3, 4, 5, 6, and 7 and Comparative Examples 1 and 2.

In each of Examples as the composition of the present invention, peaks (●) specific to AgZn-TAZ were observed. The composition of the present invention is different from Ag-TAZ (Comparative Example 1) or Zn-TAZ (Comparative Example 2).

In the cases of the molar ratio of silver and zinc as raw materials was 1:9 to 97.5:2.5 (Examples 1, 3, 4, 5, 6, and 7), the diffraction pattern of Ag-TAZ (Comparative Example 1) or Zn-TAZ (Comparative Example 2) was not observed. As the amount of silver as a raw material charged increased, a slight shift toward the low-angle side was observed in the X-ray diffraction pattern of the product, therefore it was suggested that the lattice was expanded due to an increase in content of silver having a large ionic radius.

From the above, it is considered that each composition of the present invention may be a complex.

### <Elemental analysis>

Elemental analysis (Ag, Zn) of metal components was performed using ICP-OES (ICP emission spectrometer). Using a Thermo Fisher Scientific iCAP 7600 Duo system, 0.2 ml of 60% nitric acid was added to 20 mg of the sample, the sample was adjusted to 10 g with pure water, diluted as appropriate, and measurement was performed.

For elemental analysis of nonmetallic components, a microcoder model JM10, available from J-Science Lab Co., Ltd., was used. For measurement elements (C, H, N), the sample furnace temperature was 950°C.

Table 1 shows the results of elemental analysis of the powder obtained in each of Examples and Comparative Examples and a predicted composition of the harmful organism controlling composition of the present invention.

**[Table 1]**

| Elements | Mw | at % | | | | | |
|---|---|---|---|---|---|---|---|
| | | Comparative Example 1 | Example 1 | Example 3 | Example 5 | Example 6 | Comparative Example 2 |
| Ag | 107.87 | 11.6 | 12.8 | 11.2 | 5.8 | 1.3 | 0 |
| Zn | 65.38 | 0 | 1.1 | 1.9 | 4.5 | 6.8 | 7.7 |
| C | 12.01 | 24.1 | 22 | 21.2 | 22.5 | 24.2 | 24.4 |
| H | 1.01 | 28.4 | 27.8 | 30.9 | 30.6 | 28.5 | 28 |
| N | 14.01 | 36 | 36.3 | 34.8 | 36.6 | 39.2 | 39.9 |
| Composition (molar ratio) | | Ag: TAZ | Ag:Zn: TAZ | Ag:Zn: TAZ | Ag:Zn: TAZ | Ag:Zn: TAZ | Zn:TAZ |
| | | = 1:1 | = 13:1:11 | = 11:2:11 | = 6:5:11 | = 1:7:12 | = 2:3 |

### <XPS analysis>

XPS analysis was performed using ULVAC-PHI QuantreraII (Al-Kα). Measurement was performed after calibration at Au 4f7/2 = 84.00 eV.

For the powder obtained in each of Examples and Comparative Examples and a powder obtained by physically mixing Comparative Example 1 and Comparative Example 2, the results of XPS analysis are shown in Table 2 and Table 3 (Reference Examples). Comparative Example 1 and Comparative Example 2 were prepared by physically mixing performed by mixing each powder collected at an arbitrary ratio in a mortar for 15 minutes.

The harmful organism controlling composition of the present invention had values different from Comparative Examples and is different as a substance (Table 2).

Further, when physically mixing Comparative Example 1 and Comparative Example 2, it is confirmed that there is no difference in value from the original Comparative Example 1 (Table 3).

The harmful organism controlling composition of the present invention is different from the physical mixture of Comparative Example 1 and Comparative Example 2.

It is assumed that the harmful organism controlling composition of the present invention is in a complex form.

**[Table 2]**

| Formula | eV | Difference ΔAg - TAZ from Comparative Example 1 |
|---|---|---|
| Comparative Example 1 | 367.94 | - |
| Example 1 | 368.11 | 0.17 |
| Example 3 | 368.20 | 0.26 |
| Example 5 | 368.32 | 0.39 |
| Example 6 | 368.03 | 0.10 |

**[Table 3]**

| Formula | eV | Difference ΔAg - TAZ from Comparative Example 1 |
|---|---|---|
| Comparative Example 1 | 367.94 | - |
| Comparative Example 1:Comparative Example 2 = 9:1 | 368.01 | 0.07 |
| Comparative Example 1:Comparative Example 2 = 7:3 | 368.00 | 0.07 |
| Comparative Example 1:Comparative Example 2 = 5:5 | 368.01 | 0.07 |
| Comparative Example 1:Comparative Example 2 = 1:9 | 368.01 | 0.07 |

### <Solid NMR analysis>

Solid NMR was conducted using JEOL JNM-ECZ500R NMR/, and measurement was performed at a sample rotational speed of 12 kHz (15N-NMR) and 20 kHz (13C-NMR).

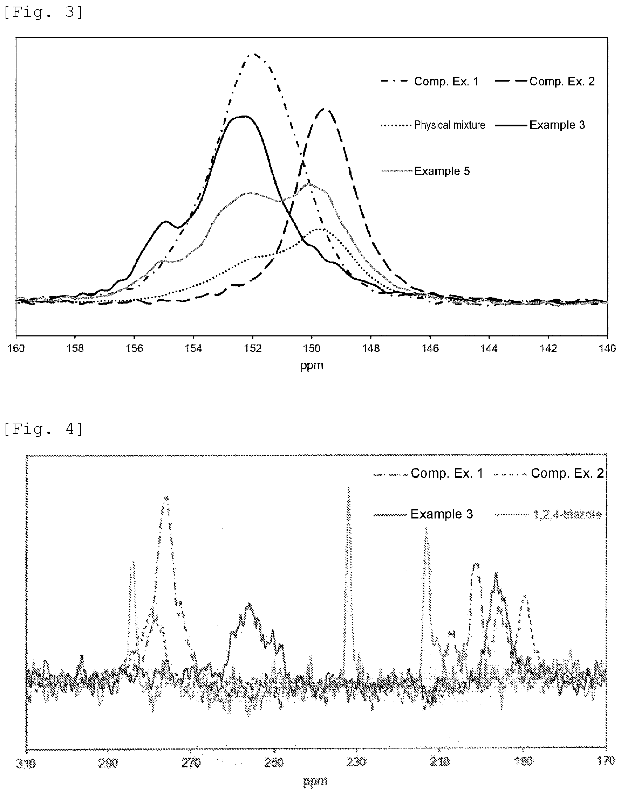

Figure 3 shows the solid NMR (13C-NMR) data of Examples 3 and 5, Comparative Examples 1 and 2, and the physical mixture of Comparative Example 1 and Comparative Example 2.

Figure 4 shows the solid NMR (15N-NMR) data of Example 3, Comparative Examples 1 and 2, and 1,2,4-triazole.

Example 5 had analysis results different from the physical mixture of Comparative Example 1 and Comparative Example 2.

It is assumed that the harmful organism controlling composition of the present invention is in a complex form.

In addition, Examples 3 and 5 are different from Comparative Examples 1 and 2.

### <Abuse test>

The powder obtained in Example 4 and the powder obtained in Comparative Example 1 were each diffused at 1 mg/ml in 1000 ppm saline solution and irradiated with ultraviolet rays (0.7 mW/cm²) using a BLB lamp.

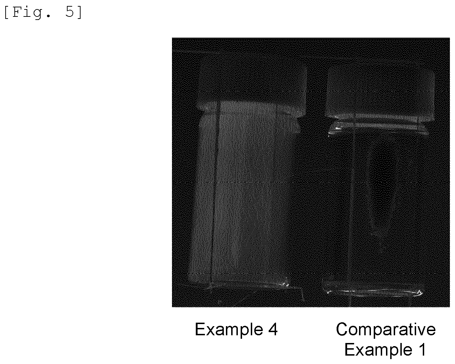

Figure 5 shows a photograph 7 days later. While the solid obtained in Example 4 maintained its white color, the powder obtained in Comparative Example 1 turned black. It is assumed that silver was precipitated.

The same experiment was performed on other Examples and Comparative Examples.

Table 4 shows the color tone during synthesis and changes in color tone after the abuse test. In Examples, it was confirmed that there were no changes in color tone or insignificant.

**[Table 4]**

| | Sample name | During synthesis | After black light test (saline solution for 7 days) |
|---|---|---|---|
| Example 1 | AgZn-TAZ | White | White |
| Example 2 | AgZn-TAZ | White | White |
| Example 3 | AgZn-TAZ | White | White |
| Example 4 | AgZn-TAZ | White | White |
| Example 5 | AgZn-TAZ | White | White |
| Example 6 | AgZn-TAZ | White | White |
| Example 7 | AgZn-TAZ | White | White |
| Example 8 | AgZn-methyltetrazole | White | White |
| Example 9 | AgZn-benzotriazole | White | White |
| Example 10 | AgZn-xanthine | Yellow | Beige |
| Example 11 | AgZn-hypoxanthine | White | White |
| Example 12 | AgZn-methylbenzotriazole | White | Beige |
| Example 13 | AgCa-TAZ | White | White |
| Example 14 | AgMg-TAZ | White | White |
| Example 15 | AgAI-TAZ | White | Brown |
| Example 16 | AgCu-TAZ | Light blue | Light blue |
| Comparative Example 1 | Ag-TAZ | White | Gray |
| Comparative Example 2 | Zn-TAZ | White | White |
| Comparative Example 3 | AgZn-uracil | Gray | Black |
| Comparative Example 4 | AgZn-cytosine | White | Black |
| Comparative Example 5 | AgZn-uric acid | Black | Black |
| Comparative Example 6 | AgZn-hexamethylenetetraamine | Black | Black |
| Comparative Example 7 | AgZn-melamine | Brown | Dark brown |
| Comparative Example 8 | Cu-TAZ | Blue | Blue |

### <Antibacterial test/antifungal test (MIC tests)>

Various chemical solutions containing a nonionic surfactant Tween 20 or Penerol N-100 were diluted to a predetermined concentration, and the diluted chemical solutions were dispensed into the wells of a 96-well plate to conduct a bacterial MIC test and a fungal MIC test under the following conditions.

### Antibacterial (bacterial MIC) test:

An inoculum of cultured bacteria (Staphylococcus aureus subsp. aureus) was added dropwise into the wells of the 96-well plate in which the chemical solutions were dispensed. The mixture was cultured statically for 7 days at 31°C in the dark, to determine the MIC (minimum inhibitory concentration) that was the lowest concentration at which no bacterial growth was observed (mg/L). Tables 5 to 7 show the results.

### Antifungal (fungal MIC) test:

An inoculum in which spores and hyphae (Aspergillus niger: Aspergillus niger) obtained by culturing were dispersed was added dropwise into the wells of the 96-well plate in which the chemical solutions were dispensed. The mixture was cultured statically for 7 days at 26°C in the dark, to determine the MIC (minimum inhibitory concentration) that was the lowest concentration at which no fungal growth was observed. Tables 5 and 7 show the results. Each MIC represents the concentration in powder form (mg/L).

**[Table 5]**

| | | Bacteria | Mold |
|---|---|---|---|
| Test compound | | Staphylococcus aureus subsp. aureus | Aspergillus niger |
| AgZn-TAZ | Example 1 | 12.5 | 3.1 |
| AgZn-TAZ | Example 3 | 6.3 | 3.1 |
| AgZn-TAZ | Example 5 | 12.5 | 12.5 |
| AgZn-TAZ | Example 6 | 50 | 25 |
| AgZn-TAZ | Example 7 | 6.3 | 6.3 |
| AgCu-TAZ | Example 16 | 6.3 | 3.1 |
| Ag-TAZ | Comparative Example 1 | 12.5 | 3.1 |
| Zn-TAZ | Comparative Example 2 | 200 | 400 |
| Cu-TAZ | Comparative Example 8 | >800 | >800 |

In the MIC tests, the sample obtained in each of Examples 1, 3, 5, 6, and 7 (AgZn-TAZ) and Example 16 (AgCu-TAZ) exhibited good antibacterial activity and good antifungal activity as in Ag-TAZ (Comparative Example 1). Among them, Examples 1, 3, 5, 7, and 16 in which 50 % or more of silver as a metal was introduced and synthesized had higher activity. The sample obtained in each of Comparative Example 2 (Zn-TAZ) and Comparative Example 8 (Cu-TAZ) had low antibacterial activity and low antifungal activity.

**[Table 6]**

| | | Bacteria |
|---|---|---|
| Test compound | | Staphylococcus aureus subsp. aureus |
| AgZn-TAZ | Example 3 | 12.5 |
| AgZn-methyltetrazole | Example 8 | 12.5 |
| AgZn-benzotriazole | Example 9 | 25 |
| AgZn-xanthine | Example 10 | 50 |
| AgZn-hypoxanthine | Example 11 | 12.5 |
| AgZn-methylbenzotriazole | Example 12 | 25 |

In the MIC tests, the sample obtained in each of Example 8 (AgZn-methyltetrazole), Example 9 (AgZn-benzotriazole), Example 10 (AgZn-xanthine), Example 11 (AgZn-hypoxanthine), and Example 12 (AgZn-methyl benzotriazole) also exhibited good antibacterial activity. In these Examples, coloration was also suppressed.

**[Table 7]**

| | | Bacteria | Mold |
|---|---|---|---|
| Test compound | | Staphylococcus aureus subsp. aureus | Aspergillus niger |
| AgCa-TAZ | Example 13 | 25 | 25 |
| AgMg-TAZ | Example 14 | 12.5 | 25 |
| AgZn-TAZ | Example 3 | 25 | 50 |
| Ag-TAZ | Comparative Example 1 | 25 | 50 |

In the MIC tests, the sample obtained in each of Example 13 (AgCa-TAZ) and Example 14 (AgMg-TAZ) exhibited good antibacterial activity and good antifungal activity. In these Examples, coloration was also suppressed.

All of the sample of Examples used in the MIC tests had no changes in color tone or insignificant even in the abuse test, but it is suggested to have a good effect on a harmful organism that was a target of each component by an appropriate amount of the silver component being appropriately released.

### <Antiviral test>

A coating film was created using the composition obtained in Example 3, to confirm its efficacy against bacteriophage Qβ, influenza virus, and feline calicivirus.

### Creation of coating film 1

Using an automatic coating device (PI-1210, available from TESTER SANGYO CO., LTD.), a coating film material liquid (ethanol: 85.944 Wt%, KBM-503 (available from Shin-Etsu Chemical Co., Ltd.): 8.74 Wt%, organosilica sol IPA-ST (available from Nissan Chemical Corporation): 3.5 Wt%, 2-methyl-4'-(methylthio)-2-morpholinopropiophenone: 0.2 Wt%, Aluminum acetylacetonate: 1.5 Wt%, and the composition obtained in Example 3: 0.116 Wt%) was applied to a biaxially stretched polyester (PET) film, available from Toray Industries, Inc. (Lumirror (R) film, T60 transparent, 250 um, 148 × 210 mm). Thereafter, it was dried in a constant temperature bath at 100°C for one minute and solidified using an ultraviolet curing photogen device (available from EYE GRAPHICS CO., LTD.).

### Antiviral test (bacteriophage Qβ)

The coating film 1 created was subjected to an antiviral test according to "fine ceramics-antiviral test method for visible light-responsive photocatalytic material-method using bacteriophage Qβ" of JIS R 1756:2020. However, the test piece inoculated with the test solution (glass and coating film 1) was not irradiated with light and was simply left standing in the dark. Bacteriophage was inoculated onto a 5 cm × 5 cm glass and coating film 1, followed by standing for 4 hours, and then the infectivity of bacteriophage was measured using Escherichia coli. Table 8 shows the results.

**[Table 8]**

| Test piece | Test compound | Infectious titer (pfu/sample) | | Antiviral activity value V* |
|---|---|---|---|---|
| | | 0 hours | 4 hours | |
| Glass | | 3.7×10⁶ | 7.0×10⁶ | |
| Coating film 1 | Example 3 | | 7.5×10³ | 2.9 |

| | | | | |
|---|---|---|---|---|
| * V Antiviral activity value: [V = Log (U)- Log (T)] U: Infectious titer of unprocessed product after 4 hours, T: Infectious titer of pharmaceutical processed products after 4 hours | | | | |

In the antiviral test (bacteriophage Qβ), coating film 1 using the composition (AgZn-TAZ) obtained in Example 3 exhibited good antivirus activity.

### Creation of coating film 2

Using an automatic coating device (PI-1210, available from TESTER SANGYO CO., LTD.), a coating film material liquid (ethylene glycol mono-n-butyl ether: 85.827 Wt%, KBM-503 (available from Shin-Etsu Chemical Co., Ltd.): 8.74 Wt%, organosilica sol NMP-ST (available from Nissan Chemical Corporation): 3.5 wt%, 2-methyl-4'-(methylthio)-2-morpholinopropiophenone: 0.2 Wt%, Aluminum acetylacetonate: 1.5 Wt%, and the composition obtained in Example 3: 0.233 Wt%) was applied to a biaxially stretched polyester (PET) film, available from Toray Industries, Inc. (Lumirror (R) film, T60 transparent, 250pm, 148 × 210 mm). Thereafter, it was dried in a constant temperature bath at 100°C for 20 minutes and solidified using an ultraviolet curing photogen device (available from EYE GRAPHICS CO., LTD.).

### Creation of coating film 3 (blank)

Using an automatic coating device (PI-1210, available from TESTER SANGYO CO., LTD.), a coating film material liquid (ethylene glycol mono-n-butyl ether: 86.06 Wt%, KBM-503 (available from Shin-Etsu Chemical Co., Ltd.): 8.74 Wt%, organosilica sol NMP-ST (available from Nissan Chemical Corporation): 3.5 wt%, 2-methyl-4'-(methylthio)-2-morpholinopropiophenone: 0.2 wt%, and Aluminum acetylacetonate: 1.5 Wt%) was applied to a biaxially stretched polyester (PET) film, available from Toray Industries, Inc. (Lumirror (R) film, T60 transparent, 250pm, 148 × 210 mm). Thereafter, it was dried in a constant temperature bath at 100°C for 20 minutes and solidified using an ultraviolet curing photogen device (available from

### EYE GRAPHICS CO., LTD.).

### Anti-influenza virus test

Using coating film 2 and coating film 3, an anti-influenza virus test was performed under the following conditions according to ISO 21702.
Virus: Influenza A virus (H3N2) A/Hong Kong/8/68 strain (Influenza virus Type A, ATCC VR-1679)
Host: MDCK cells (ATCC CCL-34)
Inoculation: Test virus solution concentration 1.6 × 10⁷ pfu/ml, the amount inoculated: 0.4 ml
Working conditions: Dark, 25°C, 0 hours and 24 hours
Virus infectious titer measurement method: Plaque method

Table 9 shows the results of the anti-influenza virus test.

**[Table 9]**

| Sample | Infectious titer (pfu/cm2) | | Antiviral activity value V* |
|---|---|---|---|
| | 0 hours | 24 hours | |
| Coating film 3 (blank) | 4.7×10⁵ | 8.4×10⁴ | |
| Coating film 2 | | 8.1×10² | 2.0 |

| | | | |
|---|---|---|---|
| * V Antiviral activity value: [V = Log (U)- Log (T)] U: Infectious titer of coating film 3 after 24 hours T: Infectious titer of coating film 2 after 24 hours | | | |

In the anti-influenza virus test, coating film 2 that used the composition (AgZn-TAZ) obtained in Example 3 exhibited good antivirus activity.

### Anti-influenza virus test (with water resistant operation)

Coating film 2 and coating film 3 were each subjected to a test after immersed in 50 mL of sterile distilled water for 18 hours (which will be hereinafter referred to as water resistant operation) by the same operation as in the anti-influenza virus test.

Table 10 shows the results of the anti-influenza virus test (with water resistant operation).

**[Table 10]**

| Sample | Infectious titer (pfu/cm2) | | Antiviral activity value V* | Remarks |
|---|---|---|---|---|
| | 0 hours | 24 hours | | |
| Coating film 3 (blank) | 9.4×10⁵ | 9.7×10⁴ | | With water resistant operation |
| Coating film 2 | | <6.3 | 4.2 | |

| | | | | |
|---|---|---|---|---|
| * V Antiviral activity value: [V = Log (U)- Log (T)] U: Infectious titer of coating film 3 after 24 hours T: Infectious titer of coating film 2 after 24 hours | | | | |

In the anti-influenza virus test, coating film 2 that used the composition (AgZn-TAZ) obtained in Example 3 exhibited good antivirus activity even after subjecting to water resistant operation.

### Anti-influenza virus test (with lightfast operation)

Coating film 2 and coating film 3 were each subjected to a test by the same operation as in the anti-influenza virus test after photoirradiated with the following device, light source, and conditions (which will be hereinafter referred to as lightfast operation).
Device: Xenon lightfastness tester ATLAS Suntest XLS+
Light source: Xenon
Conditions:
   Irradiance: 60 W/m2 (300 to 400 nm)
   Blackboard temperature (black standard): 63°C
   Processing time: 10 hours

Table 11 shows the results of the anti-influenza virus test (with lightfast operation).

**[Table 11]**

| Sample | Infectious titer (pfu/cm2) | | Antiviral activity value V* | Remarks |
|---|---|---|---|---|
| | 0 hours | 24 hours | | |
| Coating film 3 (blank) | 6.6×10⁵ | 2.1×10⁴ | | With lightfast operation |
| Coating film 2 | | <6.3 | 3.5 | |

| | | | | |
|---|---|---|---|---|
| * V Antiviral activity value: [V = Log (U)- Log (T)] U: Infectious titer of coating film 3 after 24 hours T: Infectious titer of coating film 2 after 24 hours | | | | |

In the anti-influenza virus test, coating film 2 that used the composition (AgZn-TAZ) obtained in Example 3 exhibited good antivirus activity even after lightfast operation.

### Anti-feline calicivirus test

An anti-feline calicivirus test was performed under the following conditions, using coating film 2 and coating film 3 according to ISO 21702.
Virus: Feline calicivirus F-9 strain (Feline calicivirus, ATCC VR-782)
Host: CRFK cells (ATCC CCL-94)
Inoculation: Test virus solution concentration 1.3 × 10⁷ pfu/ml, the amount inoculated: 0.4 ml
Working conditions: Dark, 25°C, 0 hours and 24 hours Virus infectious titer measurement method: Plaque method

Table 12 shows the results of the anti-feline calicivirus test.

**[Table 12]**

| Sample | Infectious titer (pfu/cm2) | | Antiviral activity value V* |
|---|---|---|---|
| | 0 hours | 24 hours | |
| Coating film 3 (blank) | 2.8×10⁵ | 2.8×10⁵ | |
| Coating film 2 | | 2.5×10¹ | 4.0 |

| | | | |
|---|---|---|---|
| * V Antiviral activity value: [V = Log (U)- Log (T)] U: Infectious titer of coating film 3 after 24 hours T: Infectious titer of coating film 2 after 24 hours | | | |

In the anti-feline calicivirus test, coating film 2 that used the composition (AgZn-TAZ) obtained in Example 3 exhibited good antivirus activity.

### Anti-feline calicivirus test (with water resistant operation)

Coating film 2 and coating film 3 were each subjected to a test by the same operation as in the anti-feline calicivirus test after subjecting to water resistant operation.

Table 13 shows the results of the anti-feline calicivirus test (with water resistant operation).

**[Table 13]**

| Sample | Infectious titer (pfu/cm2) | | Antiviral activity value V* | Remarks |
|---|---|---|---|---|
| | 0 hours | 24 hours | | |
| Coating film 3 (blank) | 3.0×10⁵ | 2.8×10⁵ | | With water resistant operation |
| Coating film 2 | | <6.3 | 4.6 | |

| | | | | |
|---|---|---|---|---|
| * V Antiviral activity value: [V = Log (U)- Log (T)] U: Infectious titer of coating film 3 after 24 hours T: Infectious titer of coating film 2 after 24 hours | | | | |

In the anti-feline calicivirus test, coating film 2 that used the composition (AgZn-TAZ) obtained in Example 3 exhibited good antivirus activity even after subjecting to water resistant operation.

### Anti-feline calicivirus test (with lightfast operation)

Coating film 2 and coating film 3 were each subjected to a test by the same operation as in the anti-feline calicivirus test after lightfast operation.

Table 14 shows the results of the anti-feline calicivirus test (with lightfast operation).

**[Table 14]**

| Sample | Infectious titer (pfu/cm2) | | Antiviral activity value V* | Remarks |
|---|---|---|---|---|
| | 0 hours | 24 hours | | |
| Coating film 3 (blank) | 2.9×10⁵ | 2.5×10⁵ | | With lightfast operation |
| Coating film 2 | | 6.3 | 4.6 | |

| | | | | |
|---|---|---|---|---|
| * V Antiviral activity value: [V = Log (U)- Log (T)] U: Infectious titer of coating film 3 after 24 hours T: Infectious titer of coating film 2 after 24 hours | | | | |

In the anti-feline calicivirus test, coating film 2 that used the composition (AgZn-TAZ) obtained in Example 3 exhibited good antivirus activity even after lightfast operation.

### Industrial Applicability

The harmful organism controlling composition of the present invention suppressed coloration, reduced changes in color tone due to environmental factors or the like, and was excellent in harmful organism control activity. It may be widely used as harmful organism control applications such as antiseptic, antifungal, antibacterial, sterilizing, antiviral, and antialgal applications.

## Claims

1. A harmful organism controlling composition comprising:
(A) a nitrogen-containing heterocyclic compound of formula (1) and/or salts thereof: 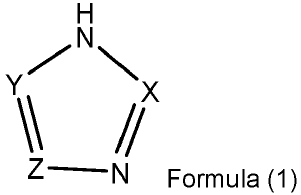
wherein in formula (1), X is a nitrogen atom or a substituted or unsubstituted carbon atom, Y is a nitrogen atom or a substituted or unsubstituted carbon atom, and Z is a substituted or unsubstituted carbon atom, and
when Y is a carbon atom, Y and Z can form a substituted or unsubstituted benzene ring or a substituted or unsubstituted 6-membered heterocycle together;
(B) one or more metal components selected from the group consisting of aluminum, calcium, magnesium, zinc, and copper; and
(C) a silver component.

2. The harmful organism controlling composition according to claim 1, wherein a molar ratio of the nitrogen-containing heterocyclic compound of formula (1) with respect to the one or more metal components selected from the group consisting of aluminum, calcium, magnesium, zinc, and copper and the silver component is 10:1 to 1:4.

3. The harmful organism controlling composition according to claim 1 or 2, wherein a content ratio of the silver component is equal molar or more with respect to that of the one or more metal components selected from the group consisting of aluminum, calcium, magnesium, zinc, and copper.

4. The harmful organism controlling composition according to any one of claims 1 to 3, wherein the nitrogen-containing heterocyclic compound of formula (1) is any one compound of 1,2,4-triazole, methyltetrazole, benzotriazole, xanthine, hypoxanthine, and methyl benzotriazole.

5. The harmful organism controlling composition according to any one of claims 1 to 4, wherein the one or more metal components selected from the group consisting of aluminum, calcium, magnesium, zinc, and copper is a zinc component.

6. The harmful organism controlling composition according to any one of claims 1 to 5, wherein the composition comprising the nitrogen-containing heterocyclic compound of formula (1), the one or more metals selected from the group consisting of aluminum, calcium, magnesium, zinc, and copper, and silver is a complex.

7. A resin molded body comprising the harmful organism controlling composition according to any one of claims 1 to 6.

8. A paint comprising the harmful organism controlling composition according to any one of claims 1 to 6.

9. A harmful organism controlling composition comprising the harmful organism controlling composition according to any one of claims 1 to 6 and at least one of other industrial biocides.
